# EUROPÄISCHE PATENTSCHRIFT

(11) **EP 2 936 119 B1**
(45) Veröffentlichungstag und Bekanntmachung des Hinweises auf die Patenterteilung: **16.01.2019**
(21) Anmeldenummer: 13815421.6
(22) Anmeldetag: 11.12.2013
(51) Int. Cl.: G01J 1/08, G01J 1/46, G01N 21/25, G01N 21/27, G01N 21/31

(54) **OPTISCHE MESSVORRICHTUNG**
OPTICAL MEASURING DEVICE
DISPOSITIF DE MESURE OPTIQUE

(30) Priorität: 21.12.2012 DE 102012113024
(43) Veröffentlichungstag der Anmeldung: 28.10.2015
(73) Patentinhaber: Hamilton Bonaduz AG, 7402 Bonaduz (CH)
(72) Erfinder: OFFENBECK, Bernd, 93057 Regensburg (DE); WILLI, Louis, CH-7402 Bonaduz (CH)
(74) Vertreter: Caspary, Karsten
(86) Internationale Anmeldenummer: PCT/EP2013/076167
(87) Internationale Veröffentlichungsnummer: WO 2014/095506

(56) Entgegenhaltungen:
- WO-A1-01/78593
- DE-A1-102006 041 013
- US-A- 4 807 630
- US-A1- 2003 069 486
- US-A1- 2003 174 317
- US-A1- 2009 240 125

## Beschreibung

Die vorliegende Erfindung betrifft das Gebiet der Prozessmesstechnik und -analytik und insbesondere eine optische Messvorrichtung zur Messung eines periodischen Signals.

In Sensoren der Prozessmesstechnik bzw. -analytik werden immer häufiger optische Messverfahren eingesetzt, bei welchen sich die Amplitude und/oder die Phasenlage eines optischen Signals nach Auftreffen auf ein Messobjekt ändern und das veränderte Signal von einem optischen Sensor erfasst wird. Ein Anwendungsbeispiel für ein derartiges optisches Messverfahren ist die Messung des Sauerstoffgehalts bzw. der Sauerstoffsättigung einer Flüssigkeit oder eines Stoffs, wobei zum Beispiel ein Farbstoff mittels eines Lichtsignals einer vorbestimmten Wellenlänge, Amplitude und Phasenlage beleuchtet wird und das vom Farbstoff reflektierte Lumineszenzlicht analysiert wird. Ändert sich die Sauerstoffkonzentration in dem Farbstoff, dann ändert sich auch die Abklingzeit der Lumineszenz und somit die Amplitude und Phasenlage des empfangenen optischen Signals. Bei entsprechender Kalibrierung sind damit Amplitude und Phase des empfangenen optischen Signals ein Maß für die Sauerstoffkonzentration.

Solche Messvorrichtungen sind beispielsweise in der US 2003/0069486 A1 und der WO 01/78593 A1 beschrieben.

Derartige Messvorrichtungen müssen in vielen Gebieten einsetzbar sein, einfach aufgebaut sowie möglichst störungssicher gegenüber äußeren und inneren Einflüssen und Nebenwirkungen sein. Beispielsweise werden sie in explosionsgefährdeten Gebieten eingesetzt, was eine möglichst geringe Leistungsaufnahme und damit relativ wenig komplexe bzw. aufwändige Bauelemente erfordert. Auch muss den ökonomischen Randbedingungen Rechnung getragen werden, z. B. durch den Einsatz von kommerziell günstig erhältlichen, zuverlässigen Bauelementen aus der Massenproduktion.

Dazu werden die Funktionalitäten von unterschiedlichen Bauelementen häufig in Mikrocontrollern gebündelt, d.h. neben einem datenverarbeitenden Mikroprozessor werden andere digitale oder analoge Bauelemente, Peripheriefunktionen oder Schnittstellen in einem Mikrochip integriert. Bei Verwendung von weiteren analogen oder digitalen Bauelementen wie z. B. einer Spannungsversorgungsschaltung oder einer Treiberschaltung außerhalb des Mikrocontrollers einer optischen Messvorrichtung kann es zu direkten Störungen oder indirekten Störungen aufgrund von parasitären Effekten von Versorgungsleitungen auf bestimmte Bauelemente kommen. Dadurch können die Messsignale verfälscht bzw. deren Auswertung negativ beeinflusst werden, wodurch die Funktion der gesamten Messvorrichtung beeinträchtigt wird.

Eine Messvorrichtung mit den Merkmalen des Oberbegriffs des Anspruchs 1 offenbart die US 2003/0174317 A1.

Es ist deshalb die Aufgabe der vorliegenden Erfindung, eine optische Messvorrichtung bereitzustellen, bei der direkte oder indirekte Störungen von elektronischen Bauelementen weitgehend vermieden werden, die einfach und kostengünstig aufzubauen ist und die eine zuverlässige Messung ermöglicht.

Diese Aufgabe wird durch den Gegenstand des Anspruchs 1 gelöst. Vorteilhafte Ausgestaltungen und Ausführungsformen sind in den abhängigen Ansprüchen beschrieben.

Erfindungsgemäß wird eine Vorrichtung zur Messung eines periodischen Signals bereitgestellt mit einer Lichtquelle zur Erzeugung eines auf ein Messobjekt gerichteten optischen Eingangssignals aus einem von einer Treibereinrichtung auf Basis eines ersten Taktsignals erzeugten elektrischen Eingangssignal, einem optischen Empfänger zur Erfassung und Umwandlung des von dem Messobjekt empfangenen Signals, das dem in Phase und Amplitude veränderten optischen Eingangssignal entspricht in ein elektrisches Messsignal, einer zentralen Steuer- und Messeinrichtung, die eingerichtet ist, das erste Taktsignal für die Treibereinrichtung zu erzeugen und das elektrische Messsignal zu empfangen und zu verarbeiten und einer Spannungsversorgungseinrichtung zur Versorgung der Treibereinrichtung, wobei die zentrale Steuer- und Messeinrichtung eingerichtet ist, ein zweites Taktsignal für die Spannungsversorgungseinrichtung zu erzeugen und das elektrische Messsignal basierend auf dem ersten und zweiten Taktsignal zu filtern, wobei die Frequenz des zweiten Taktsignals ein geradzahliges Vielfaches der Frequenz des ersten Taktsignals ist. Durch die Synchronizität des zweiten Taktsignals als exaktes geradzahliges Vielfaches des ersten Taktsignals und damit des elektrischen Messsignals werden Störungen, die über Versorgungsleitungen direkt auf die Lichtquelle wirken, oder auch Störungen, die durch parasitäre Effekte, beispielsweise Kapazitäten zwischen den Versorgungsleitungen zwischen Steuer- und Messeinrichtung sowie der Spannungsversorgungseinrichtung oder der Treibereinrichtung vorhanden sein können, wirksam vermieden.

Mit besonderem Vorteil ist die Lichtquelle als LED oder Laser ausgebildet. Derartige Lichtquellen sind sehr kostengünstig und in Massenproduktion erhältlich.

Mit weiterem Vorteil ist die Spannungsversorgungseinrichtung als Ladungspumpe ausgebildet. Ladungspumpen (engl. "charge pumps") transportieren die elektrische Ladung mit Hilfe von elektrischen Kondensatoren und durch periodische Umschaltung mit Schaltern, wodurch unterschiedlich hohe elektrische Ausgangsspannungen erzeugt werden können. In einfacher Ausführung wird eine Ladungspumpe mit Gleichspannung gespeist und erzeugt eine doppelt so hohe Gleichspannung mit gleicher Polarität als Ausgangsspannung. Zum periodischen Umschalten ist für eine derartige Ladungspumpe ein Oszillator oder ein von außen zugeführter periodischer Umschaltimpuls erforderlich. Bei der vorliegenden Erfindung kann das periodische Umschaltsignal von der Steuer- und Messeinrichtung bereitgestellt werden, und als Gleichspannungsquelle wird eine einfache Gleichspannungsversorgung mit z.B. 2V verwendet. Bei der Ansteuerung der Ladungspumpe mit dem zweiten Taktsignal entstehen durch die Versorgungsleitungen zur Treibereinrichtung Störungen, die das elektrische Messsignal für die Lichtquelle negativ beeinflussen. Durch die erfindungsgemäß entsprechend gewählte Frequenz des zweiten Taktsignals bezogen auf die Frequenz des ersten Taktsignals werden diese Störungen herausgefiltert.

Besonders bevorzugt ist es, dass die zentrale Steuer- und Messeinrichtung einen Lock-In-Verstärker aufweist. Ein Lock-In-Verstärker wird auch als phasenempfindlicher Gleichrichter oder Trägerfrequenzverstärker bezeichnet, der ein schwaches elektrisches Wechselsignal messen kann, das mit einem in Frequenz und Phase bekannten Referenzsignal moduliert ist. Damit stellt der Lock-In-Verstärker einen extrem schmalbandigen Bandpassfilter dar und verbessert dadurch das Signal-Rausch-Verhältnis (SNR).

Bei der vorliegenden Erfindung ist es insbesondere dann vorteilhaft, wenn die zentrale Steuer- und Messeinrichtung als Mikrocontroller ausgebildet ist und entsprechend integriert einen analogen oder digitalen Lock-In-Verstärker aufweist.

Mit weiterem Vorteil weist die zentrale Steuer- und Messeinrichtung einen Pulsweitenmodulation- (PWM-) Generator auf. Dieser PWM-Generator kann ebenfalls ein integrierter Bestandteil des Mikrocontrollers sein. Insbesondere kann dadurch das erste Taktsignal zur Ansteuerung der Treibereinrichtung als Rechtecksignal durch den PWM-Generator gebildet werden. Dafür ist in dem Mikroprozessor des Mikrocontrollers selbst kein Rechenaufwand notwendig, um die entsprechenden Signale zur erzeugen. Der Einsatz eines PWM-Generators ist deshalb ressourcen- und energiesparend. Vorteilhafterweise kann die zentrale Steuer- und Messeinrichtung auch einen CMOS-Schalter bzw. -Umschalter zur Steuerung des ersten bzw. zweiten Taktsignals aufweisen.

Bevorzugt ist zwischen den optischen Empfänger und der zentralen Steuer- und Messeinrichtung ein analoger oder digitaler Vorverstärker geschaltet. Aufgrund der geringen Amplituden des elektrischen Messsignals kann die Verwendung eines Vorverstärkers sinnvoll sein. Eine mögliche Einkopplung von Störsignalen aufgrund der hohen Empfindlichkeit des Vorverstärkers wird bei der erfindungsgemäßen Vorrichtung durch die geeignete Auswahl der Frequenzen von erstem und zweitem Taktsignal ebenfalls Rechnung getragen.

Die vorliegende Erfindung wird nachfolgend anhand von bevorzugten Ausführungsformen unter Bezugnahme auf die Zeichnungen beschrieben, in denen:
- Fig. 1: ein schematisches Schaltbild einer bevorzugten Ausführungsform der erfindungsgemäßen optischen Messvorrichtung darstellt; und
- Fig. 2a-2e: veranschaulichende Messsignalverläufe für verschiedene Ausführungsformen und Frequenzen des ersten und zweiten Taktsignals darstellen.

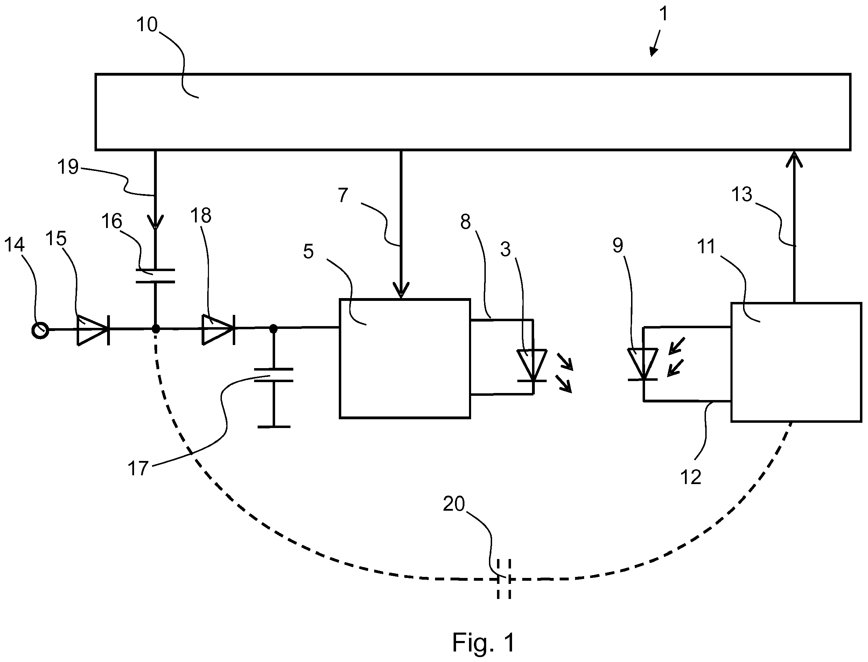

Fig. 1 zeigt eine bevorzugte Ausführungsform der erfindungsgemäßen Vorrichtung zur Messung eines periodischen Signals in einer schematischen Schaltbilddarstellung. Die Vorrichtung 1 umfasst eine Lichtquelle 3 zur Erzeugung eines auf ein (nicht dargestelltes) Messobjekt gerichteten optischen Eingangssignals aus einem von einer Treibereinrichtung 5 auf Basis eines ersten Taktsignals 7 erzeugten elektrischen Eingangssignal 8. Das erste Taktsignal 7 wird von einer zentralen Steuer- und Messeinrichtung 10 erzeugt, die weiter unten näher beschrieben ist.

Ein optischer Empfänger 9 erfasst und wandelt das von dem Messobjekt empfangene Signal, das dem in Phase und Amplitude veränderten optischen Eingangssignal entspricht, in ein elektrisches Messsignal 12 um. Das elektrische Messsignal 12 wird in einem Vorverstärker 11 verstärkt und als verstärktes elektrisches Messsignal 13 an die Steuer- und Messeinrichtung 10 geliefert.

Die zentrale Steuer- und Messeinrichtung 10 ist in der bevorzugten Ausführungsform als Mikrocontroller ausgebildet und verfügt über die Funktionalität, dass erste Taktsignal 7 zu erzeugen und auch das verstärkte elektrische Messsignal 13 zu empfangen und zu verarbeiten bzw. auszuwerten.

Weiterhin umfasst die erfindungsgemäße Vorrichtung 1 eine Spannungsversorgungseinrichtung zur Versorgung der Treibereinrichtung 5. Die Spannungsversorgungseinrichtung ist in der bevorzugten Ausführungsform als Ladungspumpe (engl. "Charge Pump") ausgebildet und weist eine Gleichspannungsquelle 14, zwei in Reihe geschaltete Dioden 15, 18, einen Pumpkondensator 16 und einen Ausgangskondensator 17 auf. Der Pumpkondensator 16 wird von der zentralen Steuer- und Messeinrichtung 10 mit einem zweiten Taktsignal 19 versorgt. An der Gleichspannungsquelle 14 liegt beispielsweise eine Gleichspannung von 2 Volt an. An dieser Stelle sei angemerkt, dass die Erfindung auch Ausführungsformen mit anderen getaktet arbeitenden Spannungsversorgungseinrichtungen betrifft, z. B. kaskadierte Ladungspumpen mit Spannungsvervielfachung.

Die Funktion der Ladungspumpe des bevorzugten Ausführungsbeispiels wird nachfolgend kurz erläutert. Im ersten Zustand liegt das zweite Taktsignal 19 am Pumpkondensator 16 an und lädt den Pumpkondensator 16 über die Diode 15 auf die Eingangsspannung der Gleichspannungsquelle 14, die z.B. 2 V beträgt, auf. Danach schaltet die zentrale Steuer- und Messeinrichtung 10 das zweite Taktsignal 19 aus. Dadurch liegen die Eingangsspannung und die Spannung am Pumpkondensator 16 in Serie, wodurch die Diode 15 in Sperrrichtung liegt und die Diode 18 leitend wird. Dadurch wird der Ausgangskondensator 17 auf etwa das doppelte der Eingangsspannung der Gleichspannungsquelle 14 aufgeladen. Diese Spannung liegt somit an der Treibereinrichtung 5 an. Danach wiederholt sich der Zyklus entsprechend der Periodizität des zweiten Taktsignals 19. An der Treibereinrichtung 5 liegt demnach im Takt des zweiten Taktsignals 19 die doppelte Spannung der Gleichspannungsquelle 14 an.

Mit dem Takt des ersten Taktsignals 7 sorgt die Treibereinrichtung 5 für die Ansteuerung der Lichtquelle 3 mittels des elektrischen Eingangssignals 8. Damit erzeugt die Lichtquelle 3 demnach auf Basis des elektrischen Eingangssignals 8 getaktet ein optisches Eingangssignal, das auf ein (nicht dargestelltes) Messobjekt gerichtet ist. Der optische Empfänger 9 empfängt das durch das Messobjekt in Amplitude und Phase veränderte optische Eingangssignal und wandelt dieses in ein elektrisches Messsignal 12 um. Das elektrische Messsignal 12 wird im Vorverstärker 11 entsprechend verstärkt und der zentralen Steuer- und Messeinrichtung 10 an einem Messeingang als verstärktes elektrisches Messsignal 13 zugeführt.

Durch die Spannungsversorgungseinrichtung der Treibereinrichtung 5 können insbesondere durch die Ansteuerung mittels des zweiten Taktsignals 19 Störungen auftreten, die entweder direkt auf die Treibereinrichtung 5 über Versorgungsleitungen wirken und damit auf die Lichtquelle 3, oder die indirekt über parasitäre Effekte Störsignale die Bauelemente des Empfangs- und Messbereiches, d. h. den optischen Empfänger 9, den Vorverstärker 12 und damit die elektrischen Messsignale 12 bzw. 13 beeinflussen können. Auch eine Rückwirkung durch die wechselnde Belastung der Ladungspumpe aufgrund der Gleichspannungsversorgung 14 ist möglich. Eine weitere Einflussmöglichkeit besteht in einer Störung der Spannungsversorgung des optischen Empfängers 9, die in der dargestellten Ausführungsform nicht enthalten ist. In der schematischen Darstellung der Fig. 1 steht die Streukapazität 20 stellvertretend für die gesamten negativen Störungseinflüsse, die die Messung des optischen Signals verfälschen können.

Derartige Störsignale, die insbesondere aufgrund des zweiten Taktsignals 19, das die Spannungsversorgungseinrichtung ansteuert, die in der bevorzugten Ausführungsform als Ladungspumpe ausgebildet ist, werden erfindungsgemäß dadurch in geeigneter Weise unterdrückt, dass die Frequenz des zweiten Taktsignals 19 ein geradzahliges Vielfaches der Frequenz des ersten Taktsignals 7 ist. Dabei ist zu berücksichtigen, dass vorteilhafter Weise die zentrale Steuer- und Messeinrichtung 10 als Mikrocontroller ausgebildet ist, der neben einem Mikroprozessor entsprechende Peripheriefunktionalitäten auf einem Chip aufweist. Insbesondere weist der Mikrocontroller entsprechende Elemente auf, die das erste und zweite Taktsignal 7, 19 und auch die Verarbeitung des verstärkten elektrischen Messsignals 13 synchron erzeugen bzw. verarbeiten können. Das bedeutet, dass die Erzeugung bzw. Auswertung der entsprechenden Signale zeitlich genau aufeinander abgestimmt werden kann, woraus sich eine sehr synchrone Phasenlage ergibt.

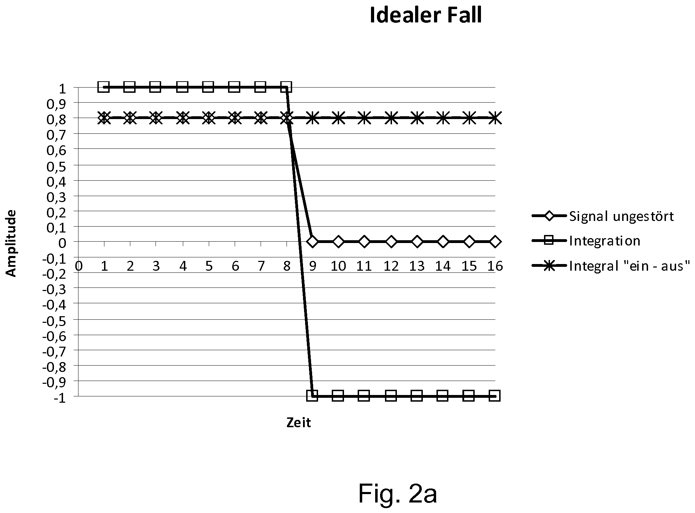

Um die erfindungsgemäße Vorrichtung weiter zu erläutern, sind in den Fig. 2a bis 2e Messsignalverläufe und entsprechende Hilfssignale für verschiedene Signalformen und - frequenzen des ersten Taktsignals 7 und damit des elektrischen Messsignals dargestellt. Dabei wird in der zentralen Steuer- und Messeinrichtung 10 von einem einfachen Lock-In-Messverfahren ausgegangen: Für eine bestimmte Zeitdauer wird mittels des ersten Taktsignals 7 die Lichtquelle 3 von der Treibereinrichtung 5 eingeschaltet. Während dieser Zeit wird das von dem optischen Empfänger 9 detektierte und entsprechend vorverstärkte elektrische Messsignal 13 in dem Lock-In-Verstärker der zentralen Steuer- und Messeinrichtung 10 verarbeitet. Es wird aufintegriert, d. h. es wird ein Mittelwert über alle Messpunkte gebildet. Anschließend wird die Lichtquelle 3 entsprechend dem Signalverlauf des ersten Taktsignals 7 für die gleiche Zeitdauer ausgeschaltet und danach ebenfalls das verstärkte elektrische Messsignal 13 in dem Lock-In-Verstärker der zentralen Steuer- und Messeinrichtung 10 integriert. Die Ergebnisse für beide Halbperioden werden voneinander abgezogen, woraus sich die Amplitude des Messsignals ergibt.

Gleichanteile z. B. durch Tageslicht werden durch diese Art von Messsignalverarbeitung sehr wirksam unterdrückt, da sie sowohl während der Einschaltphase als auch während der Ausschaltphase der Lichtquelle 3 in gleicher Stärke mitgemessen werden und sich somit gegenseitig aus der Messung herauskürzen. Wenn man dieses Verfahren oft wiederholt, wie es bei einer Lock-In-Messung üblich ist, also über eine Vielzahl von Messtakten, werden auch Frequenzen weit außerhalb des Messbereichs sehr wirksam unterdrückt.

In den Fig. 2a bis 2e sind jeweils eine Mehrzahl von Signalverläufen bzw. deren Amplitude gegenüber der Zeit aufgetragen. Die Zeit umfasst eine Periodendauer, also eine Halbperiode, in der die Lichtquelle 3 ein optisches Messsignal aussendet, und eine Halbperiode, in der kein optisches Messsignal von der Lichtquelle 3 ausgesendet wird. Die gesamte Periodendauer ist in 16 Teilabschnitte aufgeteilt, wobei das ungestörte Messsignal zu den 16 Zeitpunkten jeweils mit einer Raute dargestellt ist. Das ungestörte Messsignal weist zu den Zeitpunkten 1 bis 8 eine Amplitude von 0,8 auf und geht zu den Zeitpunkten 9 bis 16 auf den Wert 0 herunter. Die Integration des Messsignals ist durch einen Signalverlauf dargestellt, der zu den Zeitpunkten 1 bis 8 einen Wert von +1 aufweist (das Integrationssignal ist mit Quadraten gekennzeichnet), und zu den Zeitpunkten 9 bis 16 einen Wert von -1. Das Aufintegrieren des ungestörten Messsignals bedeutet in der ersten Halbperiode (Zeitpunkte 1 bis 8) ein Multiplizieren mit +1 der jeweiligen Signalwerte, und in der zweiten Halbperiode (Zeitpunkte 9 bis 16) ein Multiplizieren mit dem Wert -1. Anschließend wird der Mittelwert der ersten Halbperiode ermittelt sowie der Mittelwert der zweiten Halbperiode, und der Mittelwert der zweiten Halbperiode wird vom Mittelwert der ersten Halbperiode abgezogen und ergibt so die durchschnittliche Signalamplitude über den gesamten Bereich.

In Fig. 2a ist das ungestörte Messsignal mit einem Wert von 0,8 in der ersten Halbperiode und mit einem Wert von 0 in der zweiten Halbperiode dargestellt. Daraus ergibt sich bei einer Multiplikation mit +1 in der ersten Halbperiode und -1 in der zweiten Halbperiode ein Mittelwert der ersten Halbperiode von 0,8 und ein Mittelwert der zweiten Halbperiode von 0. Insgesamt ergibt sich also für die gesamte Zeitdauer (Zeitpunkte 1 bis 16) ein Wert von 0,8, also exakt die erwarte ursprüngliche Amplitude des Messsignals.

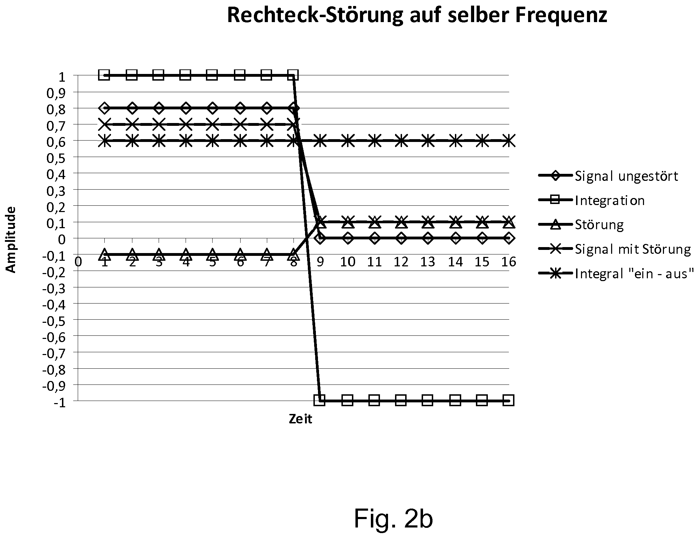

In Fig. 2b wird nun gezeigt, welchen Einfluss eine Rechteckstörung derselben Frequenz wie dem ersten Taktsignal 7 auf das Messsignal hat. Das ungestörte Messsignal ist wie in Fig. 2a in der ersten Halbperiode 0.8 und in der zweiten Halbperiode 0. Weiterhin ist eine rechteckförmige Störung dargestellt, die in der ersten Halbperiode den Wert von -0,1 aufweist und in der zweiten Halbperiode den Wert von +0,1. Beide Signale, d. h. das ungestörte Messsignal und das Störungssignal werden nun aufsummiert und sind in einer weiteren Kurve (gekennzeichnet durch ein einfaches Kreuz) dargestellt, wobei sich ein Wert in der ersten Halbperiode von 0,7 und in der zweiten Halbperiode von 0,1 ergibt, und zwar nach der Integration wie oben beschrieben. Für die erste Halbperiode bedeutet die Integration ein Multiplizieren von dem Signal mit Störung mit dem Wert +1 und in der zweiten Halbperiode eine Multiplikation mit dem Wert -1. Daraus ergibt sich ein integriertes Messsignal mit dem Wert 0,6 in beiden Halbperioden, das sich zusammensetzt aus dem Wert Mittelwert 0,7 in der ersten Halbperiode und dem Mittelwert -0,1 in der zweiten Halbperiode, und damit in der Summe ein Wert von +0,6. Für das in Fig. 1 dargestellte Ausführungsbeispiel bedeutet der Signalverlauf von Fig. 2b, dass die Ladungspumpe auf exakt dem gleichen zweiten Taktsignal 19 läuft wie die Messung, die durch das erste Taktsignal 7 gesteuert ist. Die Störung führt damit zu einer negativen Beeinflussung der Messung der Amplitude.

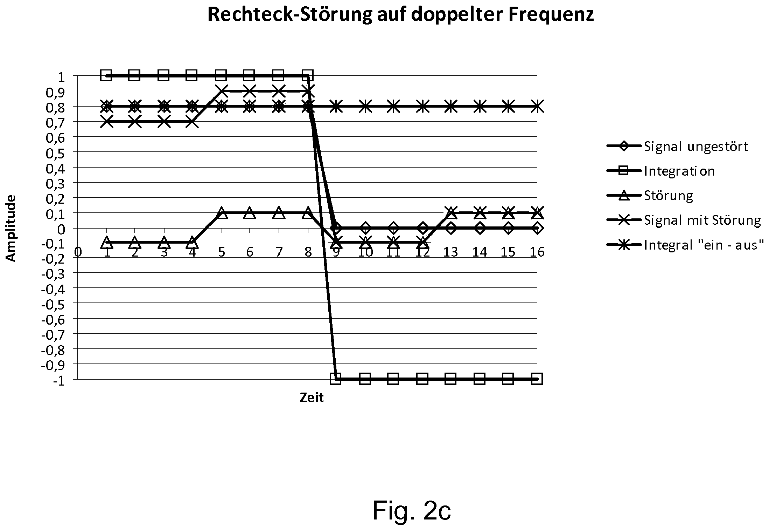

In Fig. 2c ist nun eine ähnliche Rechteckstörung wie in Fig. 2b in dem gesamten Signalverlauf dargestellt, nur läuft die Rechteckstörung nun auf der doppelten Frequenz, d. h. das zweite Taktsignal 19, das die Störung verursacht, weist genau die doppelte Frequenz auf wie das erste Taktsignal 7. Die durch Dreiecke dargestellte Rechteckstörung auf doppelter Frequenz weist also in der ersten Halbperiode vier Werte -0,1 und vier Werte von +0,1 auf, und entsprechend analog in der zweiten Halbperiode. Nach Integration und Mittelwertbildung ergibt sich für die erste Halbperiode ein durchschnittlicher Wert von 0,8, von der ein Mittelwert von 0 für die zweite Halbperiode abgezogen wird, woraus sich insgesamt ein Mittelwert von 0,8 für die gesamte Periode ergibt, also exakt das ungestörte Messsignal. In Fig. 2c zeigt sich also, dass bei exakt doppelter Frequenz des zweiten Taktsignals 19 mit Bezug auf das erste Taktsignal 7 sich Störungen komplett unterdrücken lassen. Mit anderen Worten: sind das auf dem ersten Taktsignal 7 basierende Messsignal und das Ansteuersignal der Ladungspumpe (zweites Taktsignal 19) auf doppelter Frequenz, also zeitlich perfekt synchron, so wird die bestmögliche Unterdrückung des Störsignals erreicht.

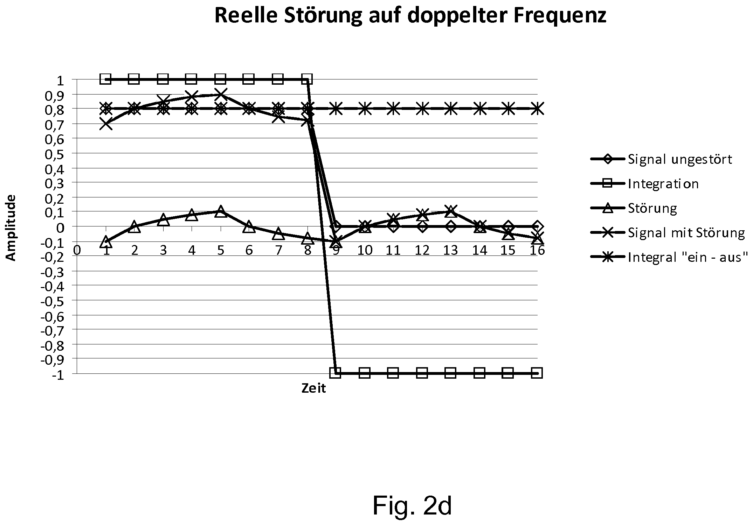

In der Realität ist ein Störsignal jedoch nicht rechteckförmig, sondern wird einen in irgendeiner Weise verzerrten Verlauf aufweisen. In Fig. 2d ist das Szenario mit einer derartigen reellen Störung auf doppelter Frequenz des ersten Taktsignals dargestellt. In der Abbildung von Fig. 2d geht man davon aus, dass das Störsignal auf der doppelten Frequenz des Messsignals einstreut, jedoch aus symmetrischen exponentiellen Einschwingvorgängen besteht. Dies kann z. B. dann der Fall sein, wenn aufgrund zu kleiner Stützkondensatoren die Ladungspumpe auf die Spannungsversorgung des optischen Empfängers 9 rückwirkt oder eine kapazitive Kopplung über die Streukapazität 20 stattfindet. Man erkennt, dass sich auch bei dieser Art von Störung, die in der Realität durchaus vorkommen kann, die Amplitudenmessung weiterhin das korrekte Messsignal liefert, da sich innerhalb jedes Zeitabschnittes, also über beide Halbperioden, das Störsignal herausmittelt.

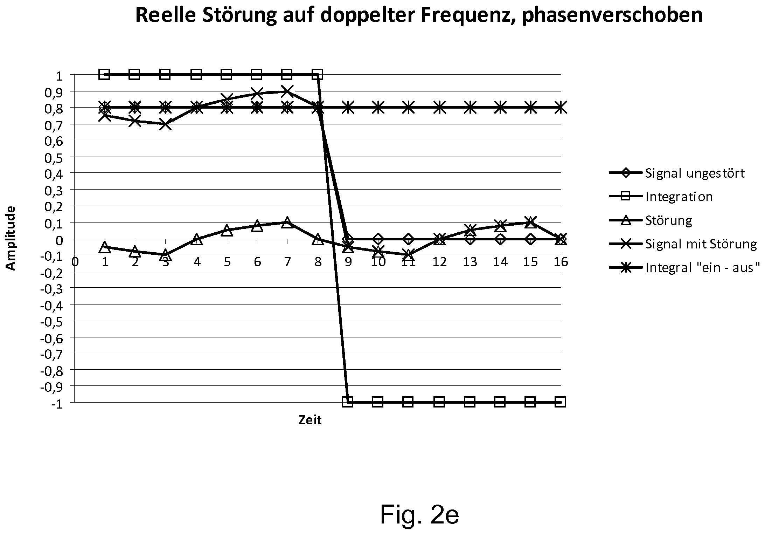

In Fig. 2e ist nun auch noch zusätzlich zu dem reellen Störsignal aus Fig. 2d eine Phasenverschiebung in das Störsignal eingebaut, und zwar um zwei Zeitabschnittspunkte. Auch in diesem Fall hebt sich die Störung innerhalb einer Periode eines Messabschnitts komplett auf. Die Wirksamkeit der erfindungsgemäßen Vorrichtung wurde deshalb auch für phasenverschobene reelle Störungen auf doppelter Frequenz des ersten Taktsignals dargelegt.

Der Fachmann wird anhand der vorliegenden Beschreibung verstehen, dass sich die Herausmittlung von Störsignalen nicht nur für die doppelte Frequenz, sondern auch für die n-fache Frequenz des zweiten Taktsignals 19 bezogen auf das erste Taktsignal 7 der bevorzugten Ausführungsform der vorliegenden Erfindung anwenden lässt, da sich die entsprechenden Anteile aus beiden Halbperioden immer herauskürzen.

Darüber hinaus versteht es sich, dass die erfindungsgemäße Vorrichtung nicht nur auf die in den Fig. 2a bis 2e dargelegte Amplitudenveränderung gilt, sondern auch für Störungen, die unterschiedliche Phasenlagen eines optischen Signals beinhalten.

Mit dem erfindungsgemäßen Gegenstand wurde eine optische Messvorrichtung bereitgestellt, bei der direkte oder indirekte Störungen von elektronischen Bauelemente weitgehend vermieden werden, die einfach und kostengünstig aufzubauen ist und die eine zuverlässige Signalmessung ermöglicht.

## Patentansprüche

1. Vorrichtung (1) zur Messung eines periodischen Signals mit
einer Lichtquelle (3) zur Erzeugung eines auf ein Messobjekt gerichteten optischen Eingangssignals aus einem von einer Treibereinrichtung (5) auf Basis eines ersten Taktsignals (7) erzeugten elektrischen Eingangssignal (8),
einem optischen Empfänger (9) zur Erfassung und Umwandlung des von dem Messobjekt empfangenen Signals, das dem in Phase und Amplitude veränderten optischen Eingangssignal entspricht, in ein elektrisches Messsignal (12),
einer zentralen Steuer- und Messeinrichtung (10), die eingerichtet ist, das erste Taktsignal (7) für die Treibereinrichtung (5) zu erzeugen und das elektrische Messsignal (12, 13) zu empfangen und zu verarbeiten, und
einer Spannungsversorgungseinrichtung zur Versorgung der Treibereinrichtung (5), **dadurch gekennzeichnet, dass**
die zentrale Steuer- und Messeinrichtung (10) eingerichtet ist, ein zweites Taktsignal (19) für die Spannungsversorgungseinrichtung zu erzeugen und das elektrische Messsignal (12, 13) basierend auf dem ersten und/oder zweiten Taktsignal (7, 19) zu filtern,
wobei die Frequenz des zweiten Taktsignals (19) ein geradzahliges Vielfaches der Frequenz des ersten Taktsignals (7) ist.

2. Vorrichtung (1) nach Anspruch 1, **dadurch gekennzeichnet, dass** die Lichtquelle (3) als LED oder Laser ausgebildet ist.

3. Vorrichtung (1) nach einem der vorhergehenden Ansprüche, **dadurch gekennzeichnet, dass** die Spannungsversorgungseinrichtung als Ladungspumpe ausgebildet ist.

4. Vorrichtung (1) nach einem der vorhergehenden Ansprüche, **dadurch gekennzeichnet, dass** die zentrale Steuer- und Messeinrichtung (10) einen Lock-In Verstärker aufweist.

5. Vorrichtung (1) nach einem der vorhergehenden Ansprüche, **dadurch gekennzeichnet, dass** die zentrale Steuer- und Messeinrichtung (10) als Mikrocontroller ausgebildet ist.

6. Vorrichtung (1) nach einem der vorhergehenden Ansprüche, **dadurch gekennzeichnet, dass** die zentrale Steuer- und Messeinrichtung (10) einen Pulsweitenmodulation- (PWM-) Generator aufweist.

7. Vorrichtung (1) nach einem der vorhergehenden Ansprüche, **dadurch gekennzeichnet, dass** das erste Taktsignal (7) als Rechtecksignal ausgebildet ist.

8. Vorrichtung (1) nach einem der vorhergehenden Ansprüche, **dadurch gekennzeichnet, dass** die zentrale Steuer- und Messeinrichtung (10) einen CMOS-Schalter bzw. -Umschalter aufweist.

9. Vorrichtung (1) nach einem der vorhergehenden Ansprüche, **dadurch gekennzeichnet, dass** zwischen den optischen Empfänger (9) und der zentralen Steuer- und Messeinrichtung (10) ein Vorverstärker (11) geschaltet ist.

## Claims

1. Device (1) for measuring a periodic signal with
a light source (3) for producing an optical input signal, directed to a measurement object, from an electrical input signal (8) which is generated by a driver unit (5) on the basis of a first clock signal (7),
an optical receiver (9) for detecting and converting the signal which is received from the measurement object and which corresponds to the optical input signal modified in phase and amplitude, into an electrical measurement signal (12),
a central control and measuring unit (10) which is set up to generate the first clock signal (7) for the driver unit (5) and to receive and process the electrical measurement signal (12, 13), and
a power supply unit for supplying the driver unit (5) with power, **characterised in that**
the central control and measuring device (10) is set up to produce a second clock signal (9) for the power supply device and to filter the electrical measurement signal (12, 13) based on the first and/or second clock signal (7, 19),
wherein the frequency of the second clock signal (19) is a whole-number multiple of the frequency of the first clock signal (7).

2. Device (1) according to claim 1 **characterised in that** the light source (3) is designed as an LED or laser.

3. Device (1) according to one of the preceding claims **characterised in that** the power supply device is designed as a charge pump.

4. Device (1) according to one of the preceding claims **characterised in that** the central control and measuring device (10) has a lock-in amplifier.

5. Device (1) according to one of the preceding claims **characterised in that** the central control and measuring device (10) is designed as a microcontroller.

6. Device (1) according to one of the preceding claims **characterised in that** the central control and measuring device (10) has a pulse-width modulation (PWM) generator.

7. Device (1) according to one of the preceding claims **characterised in that** the first clock signal (7) is designed as a square wave signal.

8. Device (1) according to one of the preceding claims **characterised in that** the central control and measuring device (10) has a CMOS switch or toggle switch.

9. Device (1) according to one of the preceding claims **characterised in that** a pre-amplifier (11) is switched in between the optical receiver (9) and the central control and measuring device (10).

## Revendications

1. Dispositif (1) de mesure d'un signal périodique comprenant
une source de lumière (3) pour la production d'un signal d'entrée optique dirigé sur un objet à mesurer à partir d'un signal d'entrée (8) électrique produit par un dispositif pilote (5) sur la base d'un premier signal d'horloge (7),
un récepteur optique (9) pour l'enregistrement et la conversion du signal reçu par l'objet à mesurer, lequel signal correspondant au signal d'entrée optique dont la phase et l'amplitude ont été modifiées, en un signal de mesure électrique (12),
un dispositif central de commande et de mesure (10), qui est configuré pour produire le premier signal d'horloge (7) pour le dispositif pilote (5) et pour recevoir et traiter le signal de mesure électrique (12, 13), et
un dispositif d'alimentation en tension pour l'alimentation du dispositif pilote (5),
**caractérisé en ce que**
le dispositif central de commande et de mesure (10) est configuré
pour produire un deuxième signal d'horloge (19) pour le dispositif d'alimentation en tension et pour filtrer le signal de mesure électrique (12, 13) sur la base du premier et/ou du deuxième signal d'horloge (7, 19),
dans lequel la fréquence du deuxième signal d'horloge (19) est un multiple pair de la fréquence du premier signal d'horloge (7) .

2. Dispositif (1) selon la revendication 1, **caractérisé en ce que** la source de lumière (3) est réalisée sous la forme d'une DEL ou d'un laser.

3. Dispositif (1) selon l'une quelconque des revendications précédentes, **caractérisé en ce que** le dispositif d'alimentation en tension est réalisé sous la forme d'une pompe de charge.

4. Dispositif (1) selon l'une quelconque des revendications précédentes, **caractérisé en ce que** le dispositif central de commande et de mesure (10) présente un amplificateur synchrone.

5. Dispositif (1) selon l'une quelconque des revendications précédentes, **caractérisé en ce que** le dispositif central de commande et de mesure (10) est réalisé sous la forme d'un microcontrôleur.

6. Dispositif (1) selon l'une quelconque des revendications précédentes, **caractérisé en ce que** le dispositif central de commande et de mesure (10) présente un générateur à module d'impulsions en largeur.

7. Dispositif (1) selon l'une quelconque des revendications précédentes, **caractérisé en ce que** le premier signal d'horloge ((7) est réalisé sous la forme d'un signal rectangulaire.

8. Dispositif (1) selon l'une quelconque des revendications précédentes, **caractérisé en ce que** le dispositif central de commande et de mesure (10) comprend un commutateur à semi-conducteur à oxyde de métal complémentaire.

9. Dispositif (1) selon l'une quelconque des revendications précédentes, **caractérisé en ce qu'**un préamplificateur (11) est monté entre le récepteur optique (9) et le dispositif central de commande et de mesure (10).
